# FASCICULE DE BREVET EUROPEEN

(11) **EP 0 419 379 B1**
(45) Date de publication et mention de la délivrance du brevet: **13.07.1994**
(21) Numéro de dépôt: 90420407.0
(22) Date de dépôt: 17.09.1990
(51) Int. Cl.: F17C 1/00, F16J 13/12

(54) **Réservoir métallique pour fluides à haute pression**
Metallbehälter für Hochdruckfluide
Metal tank for high pressure fluid

(30) Priorité: 18.09.1989 FR 8912174
(43) Date de publication de la demande: 27.03.1991
(73) Titulaire: VALTUBES, F-92100 Boulogne-Billancourt (FR)
(72) Inventeur: Fradin, Louis, F-59620 Aulnoye Aymeries (FR); de Froment, Xavier, Marie, F-75016 Paris (FR)
(74) Mandataire: Desolneux, Jean-Paul Charles

(56) Documents cités:
- FR-A- 1 572 700
- US-A- 1 569 875
- US-A- 2 396 469
- US-A- 3 654 964

## Description

La présente invention est relative à un réservoir métallique pour fluides à haute pression.

On entend par réservoir tout appareil à pression tel que par exemple des réservoirs ou des bouteilles destinés à contenir et stocker des fluides à haute pression, ou encore à servir de corps d'accumulateur.

De façon générale, les réservoirs métalliques pour fluides à haute pression contiennent des fluides comprimés à des pressions le plus souvent supérieures à environ 25 bars, pouvant atteindre 150 à 400 bars et même davantage. Parmi ces fluides on peut citer à titre d'exemple O2, N2, H2, He, Ar. Ces réservoirs sont le plus souvent réalisés à partir d'une billette extrudée ou à partir d'un tube. Dans Le cas où l'on part d'un tube, on ferme l'une des deux extrémités par forgeage, l'autre extrémité étant ensuite rétreinte à chaud puis usinée pour recevoir un robinet.

Le travail à chaud de ces tubes empêche d'utiliser les possibilités d'écrouissage des aciers, en particulier dans le cas des aciers inoxydables. Dans le cas des aciers au carbone ou alliés, on peut utiliser le traitement thermique après formage à chaud pour augmenter les caractéristiques mécaniques de ces réservoirs et diminuer ainsi les épaisseurs de parois nécessaires donc leurs poids. Mais il n'est pas facile voire impossible d'obtenir la propreté des surfaces internes de ces réservoirs, suite aux traitements thermiques réalisés ou tout simplement au formage à chaud, propreté qui peut être requise pour certaines applications.

Par ailleurs il est impossible d'atteindre l'intérieur des réservoirs pour par exemple contrôler leur surfaces internes, ou procéder à un traitement de surface, ou nettoyer ou entretenir lesdites surfaces.

La demande de brevet DE 2739736 concerne un réservoir à haute pression, pouvant contenir des gaz comprimés tels que CO2 ou O2 qui est constitué par un tube métallique dont au moins l'une des deux extrémités est fermée par un obturateur vissé. Afin d'obtenir l'étanchéité recherchée on dispose à l'intérieur du réservoir, au voisinage du filetage un anneau en un alliage de brasage convenable, tel qu'un alliage à l'argent, puis on chauffe le réservoir à la température voulue pour que l'alliage de brasage fonde, pénètre dans les filets et bouche tous les interstices. Bien que ce procédé permette de réduire le poids du réservoir en supprimant le forgeage et le rétreint il nécessite en général plusieurs traitements thermiques à des températures de 600° à 1000°C suivant les brasures mises en oeuvre. En cas d'échec on ne peut pas recommencer et si la paroi interne a été oxydée pendant le traitement il est impossible de la décaper, sabler ou grenailler correctement.

Le brevet US 1,569,875 NIXON décrit un obturateur pour tubes de vidange, vannes et récipients divers. Selon l'inventeur ce dispositif constitue un perfectionnement apporté aux moyens de fermeture des tuyaux.

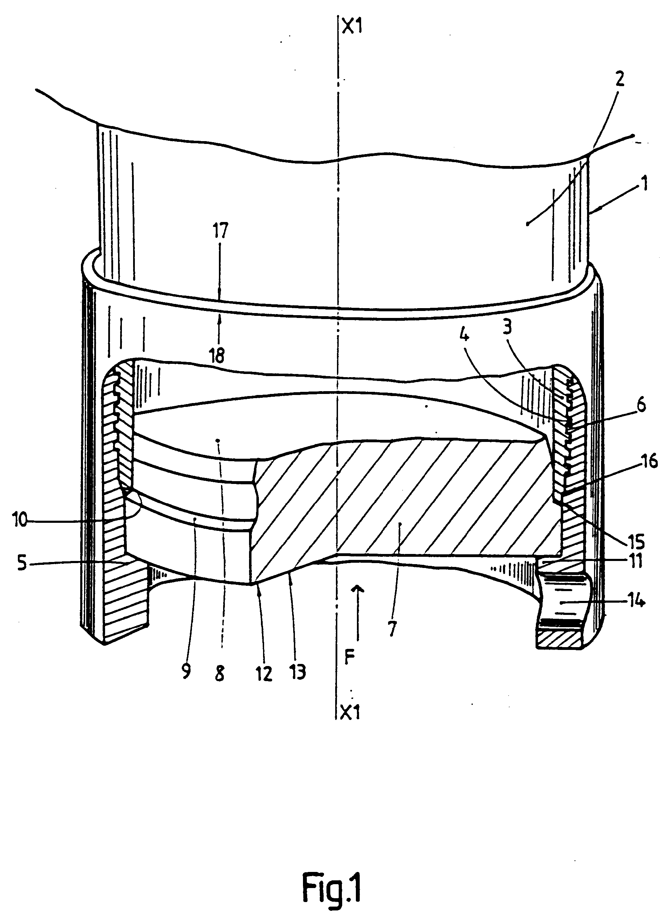

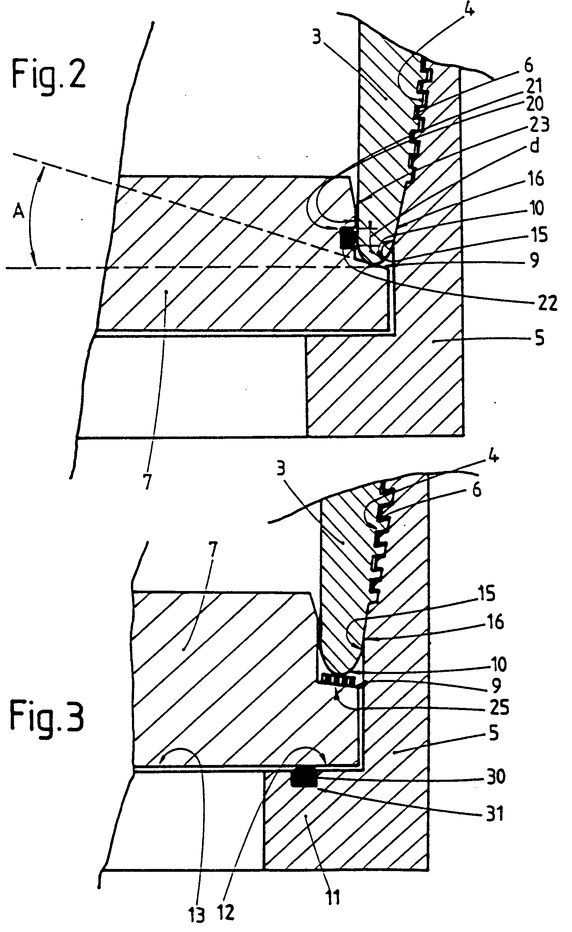

Cet obturateur comporte une plaque de fermeture 1 dont le bord extérieur est entouré d'une lèvre annulaire (voir figures 1 et 3) courbée vers le bas, formant ainsi une gorge annulaire 5 à parois tronconiques. Cette gorge est apte à s'engager autour du bord d'extrémité 6 d'une virole ou tronçon de tube 2 dont les parois tronconiques correspondent à celles de la gorge. Un couvercle de retenue 3 apte à être placé sur la plaque de fermeture comporte un filetage intérieur 12 tronconique auquel correspond le filetage extérieur 10 de la virole. Par vissage du couvercle 3 sur la virole 2 on assure le serrage de la gorge 5 sur le bord 6 de la virole et on obtient des liaisons étanches entre chacune des deux parois tronconiques de la gorge 5 et les parois correspondantes du bord 6. Cette virole 2 peut être reliée par un moyen convenable tel qu'un brasage ou un raccord fileté avec un tube métallique quelconque. Selon l'inventeur ce dispositif présente l'avantage de permettre une ouverture rapide en cas de besoin (page 2 lignes 23-28).

Il n'est ni décrit ni envisagé d'utiliser un tel moyen de fermeture pour des tubes ou des récipients devant supporter une pression intérieure notable. Il n'est pas non plus envisagé d'utiliser ce dispositif pour le stockage de fluides sous pression. Enfin la nécessité d'engager le bord d'extrémité biconique de la virole 2 dans la gorge 5 oblige à donner au filetage mâle tronconique 10 un diamètre maximal élevé. Ceci explique l'utilisation de viroles courtes ayant un bord de forte épaisseur.

L'utilisation de tronçons tubes à section constante ne serait donc possible qu'en utilisant des tubes de très forte épaisseur.

On a recherché la possibilité de réaliser des réservoirs pour fluides à haute pression sans avoir à réaliser de forgeage, emboutissage ou rétreint. On a cherché à éviter tout traitement thermique en vue d'un brasage ou d'un formage. On a plus particulièrement recherché la possibilité d'ouvrir facilement le réservoir, pour effectuer par exemple un nettoyage intérieur, le réservoir pouvant ensuite être refermé et remis en service sans perte d'étanchéité. On à recherché plus particulièrement la possibilité de réaliser un tel réservoir ayant une fermeture amovible à joint d'étanchéité métal-métal présentant une très grande sécurité d'utilisation, même dans les cas de pressions de service très élevées, pouvant atteindre de l'ordre de 25 à 500 bars et de maintiens en pression de longue durée. On a recherché aussi la possibilité de limiter au minimum le poids d'une telle fermeture amovible et également le poids de la paroi principale du récipient. On a recherché en particulier la possibilité d'utiliser pour réaliser un tel récipient, comportant au moins une fermeture amovible à l'une de ses extrémités, un tube métallique ne comportant pas de surépaisseur dans la zone d'extrémité prévue pour être équipée d'une fermeture amovible. De façon plus générale, on a enfin souhaité pouvoir réaliser des réservoirs pour fluides à haute pression dont la masse pourrait être réduite au minimum afin d'élever au maximum le rapport entre la masse du fluide emmagasiné et celle du réservoir vide.

Le réservoir métallique pour fluides à haute pression qui fait l'objet de l'invention permet de résoudre les problèmes ainsi posés. Ce réservoir permet le stockage de tout fluide sous pression. Il permet plus particulièrement le stockage de fluides à des pressions de service de l'ordre de 25 à 500 bars, en tenant compte des pressions d'épreuve correspondant à ces pressions de service.

Le réservoir métallique pour fluide suivant l'invention comporte une enceinte constituée par un tube de révolution dont au moins l'une des deux extrémités est obturée par un moyen de fermeture amovible grâce à un contact étanche métal-métal. Ce moyen de fermeture comporte un élément de serrage tubulaire muni d'un filetage tronconique apte à venir en prise avec un filetage tronconique correspondant réalisé dans la zone d'extrémité du tube. Cet élément de serrage comporte une surface de poussée apte à exercer par vissage une poussée à composante axiale sur un disque d'obturation placé dans l'axe du tube afin de mettre en appui étanche ce disque d'obturation contre ce tube dans cette zone d'extrémité.

Afin de permettre le stockage de fluides à haute pression, les moyens de fermeture de l'enceinte par mise en appui étanche du disque d'obturation contre le tube comprennent une surface annulaire de butée formant l'extrémité frontale d'une paroi de révolution solidaire de l'un des deux composants et une surface annulaire de portée, également de révolution, solidaire de l'autre composant. Cette butée et cette portée sont disposées de façon telle que le vissage de l'élément de serrage les met en appui étanche l'une contre l'autre.

Le réservoir suivant l'invention permet le stockage de fluides à des pressions de service supérieures à 25 bars et pouvant atteindre et même dépasser 500 bars. De préférence, le tube de révolution qui constitue l'enceinte du réservoir ne comporte pas de surépaisseur, au moins dans une zone d'extrémité obturée par un moyen de fermeture amovible.

De préférence également, la paroi de révolution dont l'extrémité forme butée a une épaisseur moyenne, dans la zone voisine de la butée, non supérieure à 70 % de l'épaisseur du tube dans une partie courante.

De façon avantageuse, on donne à la surface annulaire de portée une forme tronconique convexe dont la génératrice est inclinée d'environ 10 à 40° par rapport à un plan perpendiculaire à l'axe du tube. On utilise avantageusement pour la surface annulaire de butée une forme tronconique concave correspondante. On peut également donner à la surface de butée un profil différent et utiliser en particulier une surface de butée dont la génératrice a une forme arrondie convexe afin d'exercer une pression élevée dans la zone annulaire de contact avec la portée.

De préférence, le filetage tronconique du tube comporte, dans la zone la plus éloignée de l'extrémité de ce tube, des filets de hauteurs décroissantes afin de venir se raccorder avec la paroi du tube. De tels filets sont dits évanouissants.

De préférence, la paroi de révolution dont l'extrémité frontale forme la butée, comporte, dans une zone voisine de cette butée une surface annulaire extérieure dont la génératrice s'éloigne de l'axe du tube en s'éloignant de la butée, la distance de l'axe du tube de cette surface annulaire extérieure étant déterminée pour qu'elle se trouve au moins partiellement en appui élastique contre une surface annulaire intérieure en regard d'une paroi qui exerce sur elle une force de pression à composante radiale, quand la butée est en appui sur la portée. De façon particulièrement avantageuse, la courbe génératrice de la surface annulaire extérieure de la paroi de révolution dans la zone voisine de la butée est constituée de segments de droites ou de courbes convexes. A titre d'exemple la génératrice de la surface annulaire extérieure de la paroi de révolution peut être un segment de droite incliné de 2 à 20° par rapport à l'axe du tube, la courbe génératrice de la surface annulaire intérieure du segment de paroi en regard qui est en appui élastique contre elle, étant un segment de droite de même inclinaison. Il est également possible de donner à la génératrice de l'une des deux surfaces annulaires en appui élastique la forme d'un segment de droite et à l'autre génératrice une forme convexe.

Les caractéristiques des deux surfaces annulaires en appui élastique l'une contre l'autre sont déterminées pour que, lorsque la butée est en appui sur la portée, ces deux surfaces en appui élastique réalisent une liaison étanche entre elles.

Suivant un premier mode particulier de réalisation du réservoir, la paroi de révolution dont l'extrémité frontale forme la butée est constituée par une extrémité amincie du tube qui prolonge la zone à filetage mâle tronconique sur laquelle vient s'engager le filetage femelle de l'élément de serrage tubulaire, afin d'assurer le serrage étanche de la portée du disque d'obturation contre la butée. De façon avantageuse, la paroi dont la surface annulaire intérieure exerce une force de pression à composante radiale sur la surface annulaire extérieure amincie du tube, au voisinage le son extrémité frontale, est la paroi intérieure en regard de l'élément de serrage qui forme manchon, cette force de pression étant fonction du degré de serrage par vissage de cet élément de serrage.

Suivant une variante de ce premier mode particulier de réalisation du réservoir, la paroi dont la surface annulaire intérieure exerce une force de pression à composante radiale sur la surface annulaire extérieure amincie du tube, au voisinage de son extrémité frontale formant butée, est la paroi intérieure en regard d'une collerette solidaire du disque d'obturation, cette pression étant fonction du degré de serrage par vissage de l'élément de serrage à filetage femelle. Une telle disposition permet de réaliser une liaison métal-métal étanche en série avec la première liaison métal-métal étanche entre butée et portée.

Suivant un deuxième mode particulier de réalisation du réservoir, la paroi de révolution dont l'extrémité frontale constitue la butée, est reliée par son extrémité opposée à son extrémité frontale au disque d'obturation, la portée étant formée sur la paroi intérieure du tube ; ce tube comporte, dans sa zone d'extrémité, un filetage tronconique femelle avec lequel est en prise le filetage mâle de l'élément de serrage, élément de serrage dont l'extrémité avant comporte la surface annulaire de poussée qui exerce son action sur le disque d'obturation. De préférence, la surface annulaire extérieure de la paroi de révolution dont l'extrémité frontale constitue la butée, est en appui élastique, au voisinage de cette butée, contre la surface annulaire intérieure de la paroi en regard qui est celle du tube. Comme dans le cas du premier mode de réalisation, cet appui élastique a pour résultante une force de pression à composante radiale exercée par la surface intérieure de la paroi du tube sur la surface extérieure de la paroi de révolution au voisinage de la butée. De plus, cette force de pression à composante radiale permet d'établir une liaison étanche métal-métal entre les deux parois. Comme dans le cas de la variante du premier mode de réalisation du réservoir, cette liaison étanche est en série avec la liaison étanche métal-métal entre butée et portée. Comme dans les cas du premier mode de réalisation du réservoir et de sa variante, on donne aux génératrices des surfaces de ces deux parois qui viennent en contact, l'inclinaison et éventuellement la courbure voulues pour établir la liaison élastique présentant les caractéristiques recherchées aussi bien du point de vue pression à composante radiale que du point de vue étanchéité.

De façon générale, la surface de poussée qui transmet au disque d'obturation la poussée qui résulte du vissage de l'élément de serrage, est, de préférence, un épaulement annulaire, lorsque cet élément de serrage a la forme d'un manchon muni d'un filetage femelle, épaulement qui vient en appui contre une surface annulaire correspondante ménagée sur la paroi en regard du disque d'obturation.

Lorsque l'élément de serrage est muni d'un filetage mâle la surface de poussée est, de préférence, une surface annulaire formée à l'extrémité avant de cet élément de serrage qui vient en appui contre une surface correspondante, ménagée sur la paroi en regard du disque d'obturation.

De façon avantageuse, en vue d'améliorer la qualité de la liaison étanche entre butée et portée, on interpose entre les deux un joint d'étanchéité annulaire amovible. De préférence, ce joint d'étanchéité annulaire amovible est métallique.

De façon avantageuse également, dans le cas du premier mode de réalisation du réservoir on dispose un joint d'étanchéité amovible entre la paroi intérieure de l'extrémité du tube au voisinage de la butée et la paroi latérale en regard du disque d'obturation. Suivant les applications, ce joint peut être un joint métallique, tel qu'un joint à ressort hélicoïdal, ou un joint en élastomère torique, à lèvre, ou autre.

Dans le cas du premier mode de réalisation du réservoir, on peut disposer avantageusement un joint d'étanchéité amovible entre la surface annulaire de poussée de l'élément de serrage à filetage femelle et la surface annulaire en regard du disque d'obturation.

De façon avantageuse, on interpose un lubrifiant entre les surfaces en appui glissant de l'élément de serrage et du disque d'obturation, pour au moins limiter la rotation de celui-ci au cours du vis sage de l'élément de serrage, en particulier lorsque les surfaces de butée et de portée entrent en contact l'une avec l'autre. On peut aussi lubrifier les filetages mâle et ou femelle pour faciliter le vissage de l'élément de serrage.

De façon avantageuse également, le disque d'obturation présente une face frontale concave ou convexe sensiblement de révolution.

De façon avantageuse également, au moins un disque d'obturation est muni d'au moins un passage étanche pour fluide à haute pression.

De façon avantageuse également, le réservoir comporte un moyen de blocage en rotation de l'élément de serrage par rapport au tube qui permet de le maintenir bloqué en position serrée.

Ce moyen de blocage peut être une vis qui traverse l'une des deux parois en regard et dont l'extrémité s'engage dans un logement ménagé dans l'autre.

On voit que le réservoir à haute pression suivant l'invention peut être réalisé de façon parfaitement fiable à partir du tube dont il suffit d'usiner au moins une extrémité pour y adapter les moyens de fermeture amovibles suivant l'invention.

On peut donc utiliser tout type de tube dont la composition, les caractéristiques mécaniques, l'écrouissage et/ou les traitements thermomécaniques conviendront à l'utilisation envisagée. Ce réservoir à haute pression pourra, aussi souvent que cela sera nécessaire, au cours de ses utilisations successives, être ouvert à l'une au moins de ses extrémités pour un nettoyage ou un contrôle puis remis en service avec une parfaite sécurité.

Les exemples et les figures ci-après décrivent de façon non-limitative des modes particuliers de réalisation du réservoir à haute pression suivant l'invention ainsi que différentes adaptations ou variantes de réalisation ou encore différents moyens complémentaires garantissant la sécurité d'utilisation.

La figure 1 est une vue d'un premier mode de réalisation de réservoir à haute pression suivant l'invention. Elle montre, en perspective et en coupe partielle, l'une des deux zones d'extrémité d'un réservoir métallique pour fluide à haute pression suivant l'invention, faisant apparaître son moyen de fermeture étanche.

La figure 2 est une vue partielle dans un plan de coupe contenant l'axe du tube du moyen de fermeture de la figure 1, équipé d'un joint complémentaire d'étanchéité amovible, entre la paroi latérale intérieure du tube dans la zone adjacente à la butée et la paroi en regard du disque d'obturation, le moyen de fermeture n'étant pas complétement serré.

La figure 3 est une vue partielle dans un plan le coupe contenant l'axe du tube du moyen de fermeture étanche de la figure 1, équipé d'un joint d'étanchéité amovible placé entre la butée du tube et la portée de joint du disque d'obturation ainsi que d'un joint complémentaire entre l'épaulement du manchon et la surface d'appui en regard du disque d'obturation, le moyen de fermeture n'étant pas complètement serré.

La figure 4 est une vue en perspective et en coupe partielle d'une variante du premier mode de réalisation du réservoir à haute pression suivant l'invention.

La figure 5 est une vue en coupe, agrandie, dans un plan contenant l'axe X2-X2 du réservoir de la figure 4, de la zone de liaison entre la butée et la portée.

La figure 6 est une vue en perspective et en coupe partielle d'un deuxième mode particulier de réalisation du réservoir à haute pression suivant l'invention.

La figure 7 est une vue agrandie, suivant un plan contenant l'axe X3 - X3 du réservoir de la figure 6, de la zone de liaison entre la butée et la portée.

On voit figure 1, en perspective et en coupe partielle, l'une des deux zones d'extrémité d'un réservoir pour fluide à haute pression suivant l'invention. Ce réservoir 1 comporte une enveloppe constituée par un tube 2, en acier, d'axe X1-X1, apte à supporter une pression intérieure pouvant atteindre 400 bars. La zone d'extrémité 3 de ce tube est munie d'un filetage tronconique mâle 4. Le filetage est à filets évanouissants c'est-à-dire que la hauteur des filets décroît dans la zone d'extrémité des filets où se fait le raccordement avec le tube. Un élément de serrage 5, en forme de manchon, muni d'un filetage tronconique femelle 6 est vissé sur cette zone d'extrémité. A l'intérieur de cet élément de serrage 5 est logé un disque d'obturation 7 dont la face frontale 3 est perpendiculaire à l'axe X1-X1. Le bord périphérique de ce disque d'obturation 7 comporte une portée annulaire 9 contre laquelle le bord de butée 10 de la zone d'extrémité 3 du tube 2 est en appui étanche. La pression de serrage nécessaire pour obtenir cette étanchéité est obtenue au moyen de l'épaulement annulaire 11 de l'élément de serrage 5 qui, grâce au vissage de cet élément de serrage 5 sur le tube 2, vient exercer sur la bordure périphérique 12 de la face arrière 13 du disque d'obturation 7 une pression dont la composante axiale se traduit par une force de serrage F qui permet d'obtenir un contact étanche entre la butée 10 et la portée de joint 9. Pour faciliter le serrage de l'élément 5, on peut utiliser une barre de vissage non représentée qu'on engage dans un trou radial tel que 14. Pour faciliter la rotation de l'élément de serrage 5, on peut lubrifier au bisulfure de molybdène le contact entre l'épaulement 11 et la bordure périphérique 12. La portée annulaire 9 est tronconique convexe. Sa génératrice est inclinée de 10 à 40° environ par rapport à un plan perpendiculaire à l'axe pour favoriser un bon engagement des filetages 4 et 6 les uns dans les autres.

La zone du tube voisine de la butée 10, c'est-à-dire comprise entre celle-ci et le début du filetage a une épaisseur moyenne inférieure à 70 % de l'épaisseur du tube dans une partie courante.

Le bord de butée 10 présente dans le cas de la figure 1 une inclinaison correspondant à celle de la portée 9. La zone d'extrémité 3 comporte une surface extérieure latérale 15 annulaire dont la génératrice est inclinée par rapport à l'axe X1-X1 de façon à s'écarter de celui-ci en s'éloignant du bord de butée 10. Cette surface extérieure est en appui élastique contre une surface intérieure 16 annulaire correspondante de l'élément de serrage, adjacente au filetage femelle 6. Cette surface intérieure 16 annulaire a une génératrice de même inclinaison que celle de la génératrice de la surface extérieure 15. Ainsi au cours du vissage de l'élément de serrage 5 l'interaction entre les surfaces 16 et 15 entraîne un faible déplacement radial de la paroi mince de la zone d'extrémité 3 en direction de l'axe X1-X1. Cette paroi est ainsi mise en compression. En réalisant un niveau d'interaction suffisant entre les surfaces 16 et 15 et en leur donnant un bon état de surface on obtient entre ces deux surfaces une liaison métal-métal étanche. On peut lubrifier, avec par exemple du bisulfure de molybdène, au moins l'une de deux surfaces 15 ou 16 avant mise en place dé l'élément de serrage 5. Les flèches 17 et 18 sont des moyens de contrôle constitués par des repères de vissage qui permettent d'effectuer le serrage optimal de l'élément de serrage et/ou permettent de s'assurer que celui-ci ne s'est pas desserré. Le disque d'obturation 7 peut être muni de passages étanches permettant le remplissage ou la vidange du réservoir ou encore le contrôle de la pression. Ces moyens bien connus ne sont pas représentés. Le tube 2 peut être muni à ses deux extrémités du moyen de fermeture suivant l'invention. L'extrémité non représentée du réservoir 1 peut aussi être fermée par tout autre moyen connu.

La figure 2 représente de façon plus détaillée le moyen de fermeture décrit figure 1, équipé d'un joint complémentaire d'étanchéité amovible. Comme le montre cette figure la portée de joint 9 du disque d'obturation 7 est tronconique convexe et l'angle d'inclinaison "A" de sa génératrice par rapport à un plan perpendiculaire à X1-X1 est d'environ 20°. La génératrice de la butée 10 a une forme arrondie convexe, de façon à exercer une pression élevée sur la surface de la portée de joint 9. On utilise de préférence pour le disque d'obturation 7 un acier de dureté un peu plus faible que celle de l'acier du tube et on obtient ainsi en serrant suffisamment l'élément de serrage 5 une faible déformation de la portée de joint au contact de la butée qui assure l'étanchéité. Comme le montre la figure 2 il est nécessaire de serrer davantage l'élément de serrage 5 pour faire venir en butée l'épaulement 11 contre la bordure 12. Ce serrage supplémentaire entraînera une déformation des surfaces 9 et 10 de la butée et de la portée de joint et également un léger déplacement radial de la zone d'extrémité 3 du tube 2 en direction de l'axe du tube par coopération des surfaces annulaires 15 et 16. Ces deux surfaces sont sensiblement tronconiques et leurs génératrices de même inclinaison font avec l'axe du tube un angle de l'ordre de 10°. Dans le cas de la figure 2 on utilise ce léger déplacement radial pour serrer un joint torique en élastomère 22 placé dans un logement annulaire 21 réalisé dans la paroi latérale cylindrique 20 du disque d'obturation 7. Le diamètre de corde "d" de ce joint torique 22 est supérieur d'environ 20 % à la profondeur du logement 21. La surface latérale intérieure 23 de la zone d'extrémité 3, en regard de la paroi 20, est également cylindrique. Il est ainsi possible d'assurer une liaison étanche supplémentaire entre disque d'obturation et tube au moyen d'un joint amovible. Cette liaison étanche complémentaire est en série avec la liaison d'étanchéité métal-métal entre la butée 10 et la portée 9.

La figure 3 montre un mode particulier de réalisation de la liaison métal-métal entre butée et portée par insertion entre les deux d'un joint métallique amovible.

Selon ce mode particulier on dispose entre la portée de joint 9 et la butée 10 un joint annulaire métallique amovible 25. Ce joint est en un métal ou alliage ayant une grande aptitude à la déformation plastique et une limite élastique bien inférieure à celle des métaux ou alliages qui constituent le tube métallique 2 dont seule l'extrémité 3 est représentée et le disque d'obturation 7. Il est ainsi plus aisé d'assurer par vissage de l'élément de serrage 5 une déformation plastique suffisante du joint métallique 25 garantissant une excellente étanchéité. On donne au bord de butée 10, comme dans le cas de la figure 2 une forme arrondie, la portée de joint 9 restant tronconique convexe comme dans les cas précédents.

L'utilisation d'un tel joint métallique amovible 25 permet son remplacement en cas de démontage du moyen de fermeture avec la garantie de retrouver, avec un nouveau joint, une excellente étanchéité.

Un joint complémentaire d'étanchéité amovible peut être disposé comme le montre la fig. 3 entre le disque d'obturation 7 et l'élément de serrage 5. C'est un joint torique 30 en élastomère qui est placé dans un logement annulaire 31 réalisé dans l'épaulement 11 de l'élément de serrage 5 qui vient en appui contre la bordure périphérique 12 de la face arrière 13 du disque d'obturation 7. Le serrage de ce joint est assuré par le vissage de l'élément de serrage 5. Cependant ce joint, à lui seul, ne peut assurer une étanchéité suffisante que si les surfaces annulaires 15 et 16 sont elles-mêmes en appui étanche. Dans la majorité des cas, l'utilisation du joint métallique 25 entre la butée et la portée de joint 9 est suffisante pour assurer l'étanchéité sans faire appel à des joints amovibles supplémentaires.

Les figures et 5 sont des vues d'une variante de réalisation du réservoir à haute pression suivant l'invention.

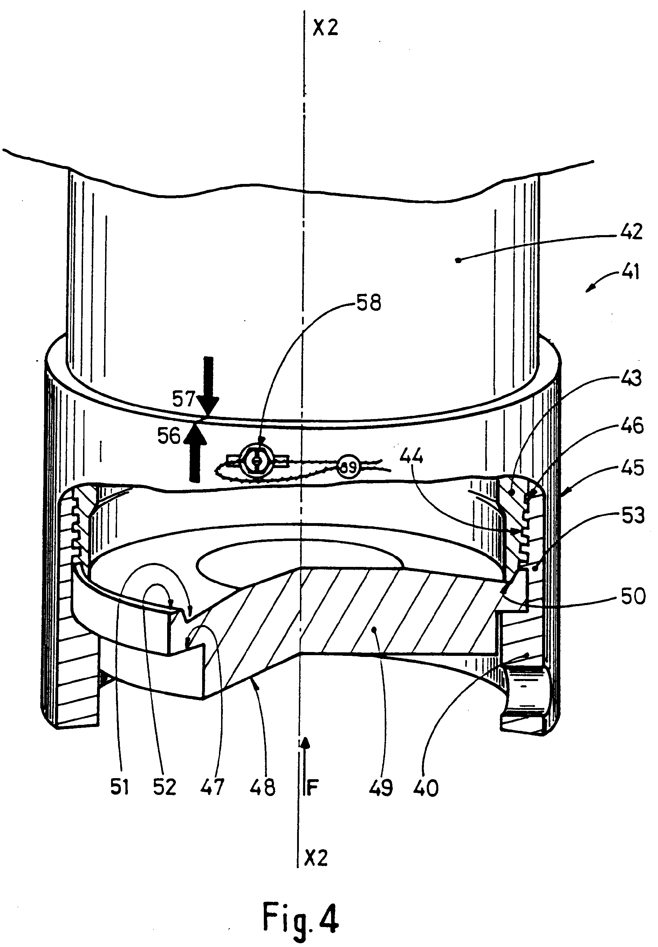

La figure 4 montre, en perpective et en coupe partielle, l'une des deux zones d'extrémité d'un réservoir métallique pour fluide à haute pression qui fait apparaître la structure particulière de la liaison étanche entre butée et portée.

Comme dans le cas de la figure 1 un réservoir 41 comporte une enveloppe constituée par un tube d'acier 42 d'axe X2-X2 apte à supporter une pression intérieure pouvant atteindre 400 bars. Ce tube comporte dans sa zone d'extrémité 43 un filetage tronconique mâle 44 sur lequel est vissé le filetage tronconique femelle 46 d'un élément de serrage en forme de manchon. Cet élément de serrage 45 comporte un épaulement annulaire 40 qui exerce sur la bordure périphérique 47 de la face arrière 48 du disque d'obturation 49 une force F qui met en appui étanche le bord annulaire de butée 50 formé par la surface d'extrémité frontale de la zone d'extrémité 43 du tube 42 contre la portée annulaire 51 de la face avant du disque d'obturation 49. A la différence de la portée 9 du disque d'obturation 7 de la figure 1 cette portée 51 n'est pas sur le bord périphérique du disque d'obturation 49. En effet une collerette 52 forme le bord périphérique du disque d'obturation 49 et s'engage au moment de la mise en place du disque d'obturation autour de l'extrémité 43 du tube 42 dans un espace annulaire ménagé entre cette extrémité 43 et la paroi 53 de l'élément de serrage 45.

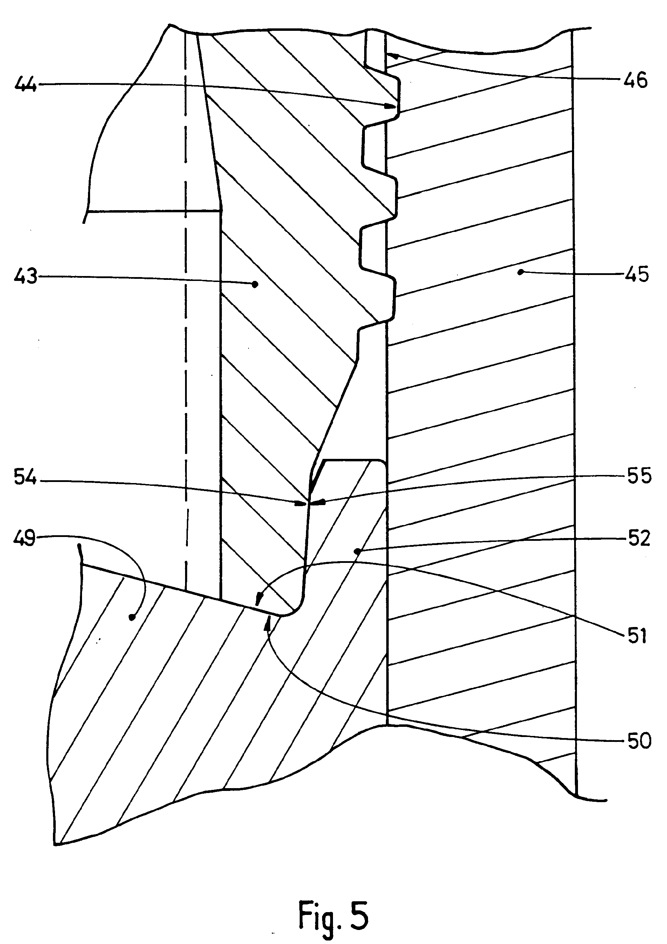

La figure 5 qui est une vue en coupe agrandie de la zone de liaison étanche entre la butée 50 et la portée 51 montre que la surface annulaire intérieure 54 de la collerette présente le même profil que la surface annulaire intérieure 16 de l'élément de serrage 5 de la figure 2. De même la surface annulaire extérieure 55 de la zone 43 du tube 42 a la même pente que la zone 15 du tube 2. Ces surfaces annulaires ont des génératrices sensiblement parallèles inclinées d'environ 10° par rapport à l'axe X2-X2 et s'écartent de cet axe en s'éloignant de la liaison entre butée 50 et portée 51. Leurs distances respectives à l'axe du tube sont déterminées de façon que le vissage de l'élément de serrage 45 permette de les amener au contact l'une de l'autre et d'exercer l'une contre l'autre une force de pression élastique à composante radiale lorsque la butée 50 a été amenée en appui contre la portée 51. En réalisant un niveau d'interaction suffisant entre les surfaces 55 et 54 et en leur donnant un état de surface de qualité suffisante on obtient entre ces deux surfaces une liaison métal-métal étanche. Cette liaison étanche se trouve en série avec la liaison butée 50 et portée 51 et apporte donc une garantie complémentaire d'étanchéité. Cette liaison complémentaire présente l'avantage d'une efficacité d'autant plus grande que la pression du fluide contenu dans le réservoir est plus élevée. Les flèches 56 et 57 sont des moyens de contrôle du degré de vissage de l'élément de serrage 45. Un trou fileté percé dans la paroi de cet élément de serrage permet d'introduire une vis de freinage plombée 58 dont l'extrémité pénètre dans une dépression de faible profondeur formée dans la paroi du tube 42. Il est ainsi possible de vérifier à tout moment le maintien du réservoir en condition d'utilisation. Le disque d'obturation 49 peut comporter, comme le disque d'obturation 7 des figures 1 à 3 des passages étanches, pour le remplissage ou la vidange du fluide ou le contrôle de sa pression.

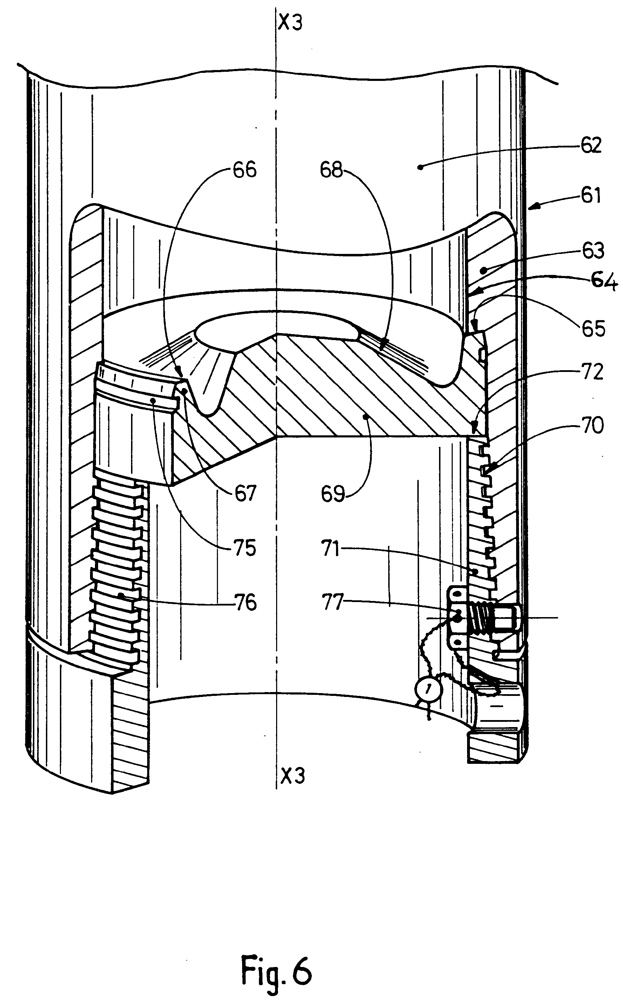

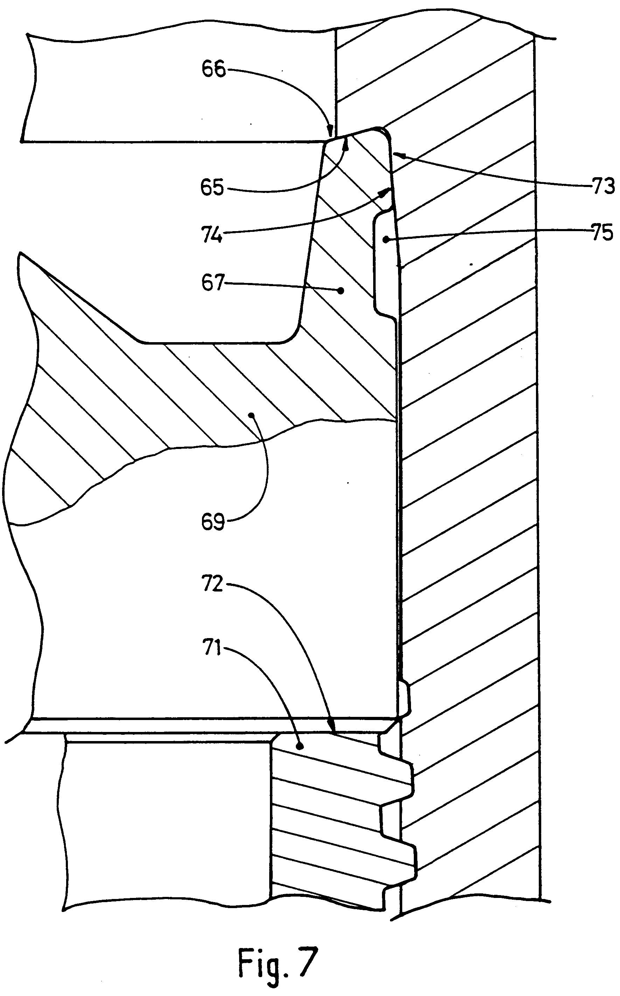

Les figures 6 et 7 sont des vues d'un deuxième mode particulier de réalisation du réservoir suivant l'invention.

La figure 6 montre l'une des deux zones d'extrémité d'un réservoir métallique pour fluide à haute pression en perspective et en coupe partielle. Cette vue fait clairement apparaître les différences qui existent entre ce mode de réalisation du dispositif suivant l'invention et le précédent.

Comme le montre cette figure 6, un réservoir 61 comporte une enveloppe constituée par un tube d'acier 62 d'axe X3-X3 apte à supporter une pression intérieure de service se trouvant en général dans le domaine compris entre 25 et 400 bars. Ce tube comporte, au voisinage de l'une au moins de ses deux extrémités, une zone 63 d'épaisseur de paroi réduite par usinage intérieur. La surface annulaire de raccordement de cette zone 63 avec la paroi intérieure 64 du tube d'épaisseur non réduite constitue la portée d'étanchéité 65 sur laquelle vient en appui une butée 66 formée à l'extrémité frontale d'une paroi de révolution 67 relativement mince, solidaire du bord périphérique de la face avant 68 d'un disque d'obturation 69 engagé à l'intérieur du tube dans sa zone 63 au-delà d'un filetage tronconique femelle 70 formé à l'intérieur de ce tube au voisinage immédiat de son orifice.

L'élément de serrage 71 est engagé à l'intérieur du tube, de façon que son extrémité avant qui comporte une surface annulaire de poussée 72, vienne en appui contre la face arrière du disque d'obturation 69. Cet élément de serrage comporte un filetage tronconique mâle 76 en prise avec le filetage femelle 70 du tube. Le vissage de l'élément de serrage 71 pousse le disque d'obturation 69 jusqu'à ce que la butée 66 vienne en appui contre la portée 65 et un serrage suffisant permet de réaliser une liaison métal-métal étanche entre cette butée et cette portée.

La figure 7 est une vue en coupe arrondie de la figure 6 suivant un plan contenant l'axe X3-X3 qui montre clairement le profil de la paroi de révolution 67, et de son bord de butée 66. On voit que ce bord de butée a une génératrice tronconique concave qui s'appuie sur une portée 65 tronconique convexe ayant une génératrice parallèle, inclinée d'environ 20° par rapport à un plan perpendiculaire à X3-X3. La zone d'extrémité de la paroi 67 comporte une surface annulaire extérieure 73 tronconique convexe dont la génératrice est inclinée d'environ 10° par rapport à l'axe X3-X3. La surface annulaire intérieure 74 de la zone d'extrémité du tube 62 qui vient en interaction avec cette surface 73 par vissage de l'élément de serrage 71, est tronconique concave et comporte une génératrice inclinée également d'environ 10° par rapport à l'axe X3-X3. Les distances à l'axe de ces deux surfaces tronconiques 73 et 74 sont déterminées de façon que leur mise en contact par vissage de l'élément de serrage 71 leur permette d'exercer l'une sur l'autre une pression élastique à composante radiale. Cette pression élastique atteint son maximum lorsque la butée 66 a été amenée en appui sur la portée 65. L'épaisseur moyenne de la zone d'extrémité de la paroi 67 est inférieure à 60 % de l'épaisseur de la paroi du tube 62 dans une partie courante et également inférieure à l'épaisseur de ce tube au niveau de la surface tronconique concave 74. Il en résulte que l'interaction entre les surfaces tronconiques 73 et 74 entraîne une déformation radiale élastique en compression de la zone d'extrémité de la paroi 67 en direction de l'axe X3-X3. La gorge annulaire 75 favorise cette déformation radiale élastique en réduisant l'épaisseur de la paroi 67 dans la zone de raccordement avec la face avant 63 du disque d'obturation 69.

On réalise ainsi entre les surfaces tronconiques 73 et 74 une liaison élastique métal-métal étanche. Cette liaison étanche est en série avec la liaison qui est réalisée simultanément entre la butée 66 et la portée 65. On obtient donc ainsi, comme dans le cas de la variante de réalisation représentée aux figures 4 et 5, une garantie complémentaire d'étanchéité qui ne nécessite pas l'utilisation de joints amovibles complémentaires.

Bien que dans le cas de cet exemple les génératrices des surfaces 73 et 74 assurant cette liaison étanche métal-métal soient rectilignes il est possible de leur donner d'autres profils. Il est suffisant que ces génératrices présentent une inclinaison générale par rapport à l'axe du tube qui les éloigne de l'axe du tube, lorsque, étant au voisinage l'une de l'autre elles s'éloignent de la butée. L'inclinaison moyenne de ces génératrices est de préférence comprise entre environ 2 et 20°. Ces génératrices peuvent être constituées par des segments de droites ou des courbes convexes.

Comme dans les cas des exemples précédents, le tube 62 peut être fermé à ses deux extrémités par des moyens suivant l'invention tels que ceux qui viennent d'être décrits. Au moins un disque d'obturation peut comporter au moins un passage étanche pour le remplissage ou la vidange du fluide ou le contrôle de sa pression.

Comme le montre la figure 6 un moyen de freinage constitué par une vis plombée 77 peut garantir le degré de vissage de l'élément de serrage mâle 71 sur l'extrémité du tube 63 de façon analogue à l'action de la vis 58 de la figure 4.

De très nombreuses variantes ou modifications peuvent être apportées au dispositif qui fait l'objet de l'invention sans sortir du domaine de celle-ci.

## Revendications

1. Réservoir métallique pour fluide comportant une enceinte constituée par un tube de révolution dont au moins l'une des deux extrémités est obturée par un moyen de fermeture amovible grâce à un contact étanche métal-métal, ce moyen de fermeture comportant un élément de serrage tubulaire muni d'un filetage tronconique apte à venir en prise avec un filetage tronconique correspondant réalisé dans la zone d'extrémité du tube, cet élément de serrage comportant une surface de poussée apte à exercer par vissage une poussée à composante axiale sur un disque d'obturation placé dans l'axe du tube afin de mettre en appui étanche ce disque d'obturation conre ce tube dans cette zone d'extrémité, caractérisé en ce que, pour permettre le stockage de fluides à haute pression les moyens de fermeture de l'enceinte par mise en appui étanche du disque d'obturation (7, 49, 69) contre le tube (2, 42, 62) comprennent une surface annulaire de butée (10, 50, 66), formant l'extrémité frontale d'une paroi de révolulion solidaire de l'un de ces deux composants et une surface annulaire de portée (9, 51, 65) également de révolution, solidaire de l'autre composant, les dimensions de cette butée et de cette portée étant telles que le vissage de l'élément de serrage (5, 45, 71) avec un couple déterminé les met en appui étanche l'une contre l'autre et en ce que la paroi de révolution dont l'extrémité frontale forme la butée comporte une surface annulaire extérieure (15, 55, 73) dont la génératrice s'éloigne de l'axe du tube en s'éloignant de la butée, surface annulaire dont la distance de l'axe du tube est déterminée pour qu'elle se trouve, au moins partiellement, en appui élastique contre une surface annulaire intérieure (16, 54, 74) en regard d'une paroi qui exerce sur elle une force de pression à composante radiale quand la butée est en appui sur la portée.

2. Réservoir métallique suivant revendication 1 caractérisé en ce que la surface annulaire extérieure de la paroi de révolution dont l'extrémité frontale forme la butée comporte dans une zone voisine de cette butée, une génératrice (15, 55, 73) qui est un segment de droite incliné de 2 à 20° par rapport à l'axe du tube.

3. Réservoir métallique suivant revendication 1 ou 2 caractérisé en ce que les deux surfaces annulaires (15, 16 ; 54, 55 ; 73, 74) en appui élastique l'une contre l'autre, sont déterminées pour que, lorsque la butée (10, 50, 66) est en appui sur la portée (9, 51, 65), ces deux surfaces en appui élastique réalisent une liaison étanche entre elles.

4. Réservoir suivant l'une des revendications 1 à 3 caractérisé en ce que le tube de révolution (2, 42, 62) qui constitue l'enceinte, ne comporte pas de surépaisseur, au moins dans une zone d'extrémité obturée par un moyen de fermeture amovible.

5. Réservoir suivant l'une des revendications 1 à 4 caractérisé en ce que la paroi de révolution (3, 43, 67) dont l'extrémité frontale forme butée, a une épaisseur moyenne, dans la zone voisine de la butée, pas supérieure à 70 % de l'épaisseur du tube (2, 42, 62) dans une partie courante.

6. Réservoir suivant l'une des revendications 1 à 5 caractérisé en ce que la surface annulaire de portée (9, 51, 65) est tronconique convexe et comporte une génératrice inclinée d'environ 10 à 40° par rapport à un plan perpendiculaire à l'axe du tube.

7. Réservoir suivant l'une des revendications 1 à 6 caractérisé en ce que le filetage tronconique (4) du tube comporte, dans sa zone la plus éloignée de l'extrémité de ce tube, des hauteurs de filets décroissantes au voisinage de son raccordement avec la paroi du tube.

8. Réservoir suivant l'une des revendications 1 à 7 caractérisé en ce que la paroi de révolution (3, 43) dont l'extrémité forme la butée (10, 50) est constituée par une extrémité du tube amincie qui prolonge la zone de filetage mâle tronconique (4, 44) sur laquelle vient s'engager le filetage femelle (6, 46) de l'élément de serrage tubulaire (5, 45) afin d'assurer le serrage étanche de la portée (9, 51) du disque d'obturation (7, 49) contre la butée (10, 50).

9. Réservoir suivant revendication 8 caractérisé en ce que la paroi dont la surface annulaire intérieure (16) exerce une force de pression à composante radiale sur la surface annulaire extérieure (15) amincie du tube, au voisinage de son extrémité frontale formant butée (10), est la paroi intérieure en regard de l'élément de serrage (5), cette pression étant fonction du degré de serrage par vissage de l'élément de serrage.

10. Réservoir suivant revendication 8 caractérisé en ce que la paroi dont la surface annulaire intérieure exerce une force de pression à composante radiale sur la surface annulaire extérieure (55) amincie du tube (42), au voisinage de son extrémité frontale formant butée (50) est la paroi intérieure (54) en regard d'une collerette (52) solidaire du disque d'obturation (49), cette pression étant fonction du degré de serrage par vissage de l'élément de serrage (45).

11. Réservoir suivant l'une des revendications 1 à 7 caractérisé en ce que la paroi de révolution (67) dont l'extrémité frontale constitue la butée (66) est reliée par son extrémité opposée à son extrémité frontale au disque d'obturation (69) et en ce que la portée (65) est formée sur la paroi intérieure du tube (62), lequel comporte un filetage tronconique femelle (70) sur lequel est en prise le filetage mâle (76) de l'élément de serrage (71).

12. Réservoir suivant revendication 11 caractérisé en ce que la paroi dont la surface annulaire intérieure (74) exerce une pression à composante radiale sur la surface annulaire extérieure (73) de la paroi de révolution (67) dont l'extrémité frontale constitue la butée (66) est la paroi intérieure en regard du tube (62) dans la zone comprise entre la portée (65) et le filetage femelle (70) de ce tube.

13. Réservoir suivant l'une des revendications 1 à 12 caractérisé en ce qu'un joint d'étanchéité annulaire amovible (25) est placé entre la butée et la portée.

14. Réservoir suivant revendication 13 caractérisé en ce que le joint d'étanchéité annulaire (25) est métallique.

15. Réservoir suivant l'une des revendications 8 à 10 caractérisé en ce qu'il comporte un joint d'étanchéité amovible (22) entre la paroi intérieure (23) de l'extrémité du tube adjacente à la butée (10) et la paroi latérale en regard (20) du disque d'obturation (7).

16. Réservoir suivant l'une des revendications 1 à 15 caractérisé en ce qu'il comporte un joint d'étanchéité amovible (30) entre la zone annulaire de poussée (11) de l'élément de serrage (5) et la surface annulaire (12) en regard du disque d'obturation (7).

17. Réservoir suivant l'une des revendications 1 à 16 caractérisé en ce qu'un lubrifiant est réparti entre les surfaces en appui glissant de l'élément de serrage (5, 45, 71) et du disque d'obturation (7, 49, 69) pour empêcher la rotation de celui-ci au cours du vissage de l'élément de serrage.

18. Réservoir suivant l'une des revendications 1 à 17 caractérisé en ce qu'un moyen de blocage en rotation (58, 77) permet d'éviter le desserrage de l'élément de serrage (45, 71).

19. Réservoir suivant l'une des revendications 1 à 18 caractérisé en ce que le disque d'obturation présente une face frontale concave ou convexe sensiblement de révolution.

20. Réservoir suivant l'une des revendications 1 à 19 caractérisé en ce qu'au moins un disque d'obturation est muni d'au moins un passage étanche pour fluide à haute pression.

## Patentansprüche

1. Metallbehälter für Fluid umfassend ein Behältnis aus einem Drehrohr, von dem zumindest eines der beiden Enden mittels eines abnehmbaren Verschlusses dank eines dichten Metall-Metall-Kontakts verschlossen ist, wobei dieser Verschluß ein röhrenförmiges Spannelement mit einem kegelstumpfförmigen Gewinde aufweist, das geeignet ist, in ein entsprechendes, im Endbereich des Rohrs vorgesehenes, kegelstumpfförmiges Gewinde zu greifen, wobei dieses Spannelement eine Druckfläche aufweist, die geeignet ist, durch Schrauben einen Druck mit Axialkomponente auf eine auf der Rohrachse angeordnete Verschlußscheibe auszuüben, um diese Verschlußscheibe dicht abschließend gegen dieses Rohr in diesem Endbereich zu drücken, dadurch gekennzeichnet, daß zur Lagerung von Hochdruckfluiden die Vorrichtungen zum Verschließen des Behälters durch festes Andrücken der Verschlußscheibe (7, 49, 69) gegen das Rohr (2, 42, 62) eine ringförmige Anschlagfläche (10, 50, 66) aufweisen, welche die Stirnseite einer Drehwand bildet, die fest mit einem dieser beiden Teile verbunden ist, sowie eine ringförmige Auflagefläche (9, 51, 65), die ebenfalls eine Drehfläche und fest mit dem anderen Teil verbunden ist, wobei die Abmessungen dieses Anschlags und dieser Auflage so bemessen sind, daß sie durch Verschrauben des Spannelements (5, 45, 71) mit einem gegebenen Moment dicht abschließend gegeneinander gedrückt werden, sowie dadurch, daß die Drehwand, deren Vorderende den Anschlag bildet, eine ringförmige Außenfläche (15, 55, 73) aufweist, deren Erzeugende sich mit Entfernen vom Anschlag von der Rohrachse entfernt, und zwar eine ringförmige Fläche, deren Abstand von der Rohrachse so bestimmt ist, daß sie zumindest teilweise elastisch an einer gegenüber liegenden ringförmigen Innenfläche (16, 54, 74) einer Wand anliegt, die auf sie eine Druckkraft mit radialer Komponente ausübt, wenn der Anschlag auf der Auflage aufliegt.

2. Metallbehälter nach Anspruch 1, dadurch gekennzeichnet, daß die ringförmige Außenfläche der Drehwand, deren Stirnseite den Anschlag bildet, in einem diesem Anschlag benachbarten Bereich eine Erzeugende (15, 55, 73) aufweist, die ein zur Rohrachse um 2 bis 20° geneigtes Geradensegment ist.

3. Metallbehälter nach Anspruch 1 oder 2, dadurch gekennzeichnet, daß die beiden elastisch aneinander anliegenden ringförmigen Flächen (15, 16; 54, 55; 73, 74) so bestimmt sind, daß, wenn der Anschlag (10, 50, 66) auf der Auflage (9, 51, 65) aufliegt, diese beiden elastisch anliegenden Flächen miteinander eine dichte Verbindung bilden.

4. Metallbehälter nach einem der Ansprüche 1 bis 3, dadurch gekennzeichnet, daß das Drehrohr (2, 42, 62), das den Behälter bildet, zumindest in einem durch einen wegnehmbaren Verschluß verschlossenen Endbereich keine Verstärkung aufweist.

5. Behälter nach einem der Ansprüche 1 bis 4, dadurch gekennzeichnet, daß die Drehwand (3, 43, 67), deren Stirnseite den Anschlag bildet, in dem dem Anschlag benachbarten Bereich eine durchschnittliche Dicke aufweist, die 70 % der Dicke des Rohrs (2, 42, 62) in einem laufenden Stück nicht überschreitet.

6. Behälter nach einem der Ansprüche 1 bis 5, dadurch gekennzeichnet, daß die ringförmige Auflagefläche (9, 51, 65) konvex kegelstumpfförmig ist und eine Erzeugende aufweist, die gegenüber einer zur Rohrachse senkrechten Ebene um 10 bis 40° geneigt ist.

7. Behälter nach einem der Ansprüche 1 bis 6, dadurch gekennzeichnet, daß das kegelstumpfförmige Gewinde (4) des Rohrs in seinem vom Ende dieses Rohres am weitesten entfernten Bereich nahe seiner Verbindung mit der Rohrwand abnehmende Ganghöhen aufweist.

8. Behälter nach einem der Ansprüche 1 bis 7, dadurch gekennzeichnet, daß die Drehwand (3, 43), deren Ende den Anschlag bildet (10, 50), aus einem zugeschärften Ende des Rohrs besteht, das den kegelstumpfförmigen Einschraubgewindebereich (4, 44) verlängert, auf den das Aufschraubgewinde (6, 46) des röhrenförmigen Spannelements (5, 45) geschraubt wird, damit die Auflagefläche (9, 51) der Verschlußscheibe (7, 49) dicht auf dem Anschlag (10, 50) aufliegt.

9. Behälter nach Anspruch 8, dadurch gekennzeichnet, daß die Wand, deren ringförmige Innenfläche (16) einen Druck mit radialer Komponente auf die dünnere ringförmige Außenfläche (15) des Rohrs nahe seiner den Anschlag (10) bildenden Stirnseite ausübt, die dem Spannelement (5) gegenüberliegende Innenwand ist, wobei dieser Druck vom Grad der Spannung durch Verschrauben des Spannelements abhängt.

10. Behälter nach Anspruch 8, dadurch gekennzeichnet, daß die Wand, deren ringförmige Innenfläche einen Druck mit radialer Komponente auf die abgeschärfte, ringförmige Außenfläche (55) des Rohrs (42) nahe seiner den Anschlag (50) bildenden Stirnseite ausübt, die Innenwand (54) ist, die einem fest mit der Verschlußscheibe (49) verbundenen Innenbord (52) gegenüberliegt, wobei dieser Druck vom Grad der Spannung durch Verschrauben des Spannelements (45) abhängt.

11. Behälter nach einem der Ansprüche 1 bis 7, dadurch gekennzeichnet, daß die Drehwand (67), deren Stirnseite den Anschlag (66) bildet, an dem ihrer Stirnseite entgegengesetzten Ende mit der Verschlußscheibe (69) verbunden ist, sowie dadurch, daß die Auflage (65) auf der Innenwand des Rohrs (62) gebildet ist, welches ein kegelstumpfförmiges Aufschraubgewinde (70) aufweist, in welches das Einschraubgewinde (76) des Spannelements (71) greift.

12. Behälter nach Anspruch 11, dadurch gekennzeichnet, daß die Wand, deren ringförmige Innenfläche (74) einen Druck mit radialer Komponente auf die ringförmige Außenfläche (73) der Drehwand (67) ausübt, deren Stirnseite den Anschlag (66) bildet, die Innenwand ist, die dem Rohr (62) im Bereich zwischen der Auflage (65) und dem Aufschraubgewinde (70) dieses Rohrs gegenüberliegt.

13. Behälter nach einem der Ansprüche 1 bis 12, dadurch gekennzeichnet, daß eine wegnehmbare, ringförmige Dichtung (25) zwischen den Anschlag und die Auflage gesetzt ist.

14. Behälter nach Anspruch 13, dadurch gekennzeichnet, daß die ringförmige Dichtung (25) aus Metall besteht.

15. Behälter nach einem der Ansprüche 8 bis 10, dadurch gekennzeichnet, daß er eine wegnehmbare, ringförmige Dichtung (22) zwischen dem der Innenwand (23) des an den Anschlag (10) angrenzenden Rohrendes und der der Verschlußscheibe (7) gegenüberliegenden Seitenwand (20) aufweist.

16. Behälter nach einem der Ansprüche 1 bis 15, dadurch gekennzeichnet, daß er eine wegnehmbare Dichtung (30) zwischen dem ringförmigen Druckbereich (11) des Spannelements (5) und der der Verschlußscheibe (7) gegenüberliegenden ringförmigen Fläche (12) aufweist.

17. Behälter nach einem der Ansprüche 1 bis 16, dadurch gekennzeichnet, daß zwischen den gleitenden Auflageflächen des Spannelements (5, 45, 71) und der Verschlußscheibe (7, 49, 69) ein Schmiermittel aufgebracht wird, um die Drehung der Verschlußscheibe beim Schrauben des Spannelements zu verhindern.

18. Behälter nach einem der Ansprüche 1 bis 17, dadurch gekennzeichnet, daß mittels einer Drehblockiervorrichtung (58, 77) ein Aufschrauben der Spannvorrichtung (45, 71) verhindert werden kann.

19. Behälter nach einem der Ansprüche 1 bis 18, dadurch gekennzeichnet, daß die Verschlußscheibe eine im wesentlichen drehende konkave oder konvexe Stirnseite aufweist.

20. Behälter nach einem der Ansprüche 1 bis 19, dadurch gekennzeichnet, daß mindestens eine Verschlußscheibe über mindestens eine dicht abschließende Durchführung für Hochdruckfluid verfügt.

## Claims

1. A metal container for fluid and comprising an enclosure consisting of a tube of revolution of which at least one of the two ends is occluded by removable closure means thanks to a metal-metal sealing-tight contact, said closure means comprising a tubular clamping element provided with a frustoconical screw thread adapted to engage a corresponding frustoconical screw thread made in the end zone of the tube, said clamping element comprising a thrust surface adapted, when screwed up, to exert a thrust having an axial component against an occlusion disc placed in the axis of the tube in order to bring said occlusion disc into a sealing-tight bearing relationship against the said tube in the said end zone, characterised in that to allow the storage of fluids at high pressure the means of closing the enclosure by bringing the occlusion disc (7, 49, 69) to bear in sealing-tight manner against the tube (2, 42, 62) comprise an annular abutment surface (10, 50, 66) forming the front end of a wall of revolution rigid with one of the said two components and an annular bearing surface (9, 51, 65) which is likewise a surface of revolution, rigid with the other component, the dimensions of the said abutment and of the said bearing surface being such that screwing up the clamping element (5, 45, 71) with a specific torque causes them to bear one on the other in a sealing-tight manner and in that the wall of revolution of which the front end forms the abutment comprises an outer annular surface (15, 55, 73) the generatrix of which becomes remote from the axis of the tube with increasing remoteness from the abutment, said annular surface, of which the distance from the axis of the tube is determined so that it is at least partially bearing in resilient fashion against an inner annular opposed surface (16, 54, 74) of a wall which exerts on it a pressure force having a radial component when the abutment bears against the bearing surface.

2. A metal container according to Claim 1, characterised in that the outer annular surface of the wall of revolution, the front end of which forms the abutment, comprises in a zone adjacent this abutment a generatrix (15, 55, 73) which is a segment of a straight line inclined by 2 to 20° in relation to the axis of the tube.

3. A metal container according to Claim 1 or 2, characterised in that the two annular surfaces (15, 16; 54, 55; 73, 74) which bear resiliently against each other are determined so that when the abutment (10, 50, 66) is bearing on the bearing surface (9, 51, 65), these two surfaces which are in resilient bearing contact produce a sealing-tight connection between them.

4. A container according to one of Claims 1 to 3, characterised in that the tube of revolution (2, 42, 62) which constitutes the enclosure does not have any over-thickness, at least in the end zone which is occluded by removable closure means.

5. A container according to one of Claims 1 to 4, characterised in that the wall of revolution (3, 43, 67) of which the front end forms an abutment has in the zone adjacent to the abutment an average thickness which is no greater than 70% of the thickness of the tube (2, 42, 62) in an ordinary part.

6. A container according to one of Claims 1 to 5, characterised in that the annular bearing surface (9, 51, 65) is convexly frustoconical and comprises a generatrix inclined by about 10 to 40° in relation to a plane at right-angles to the axis of the tube.

7. A container according to one of Claims 1 to 6, characterised in that the frustoconical screw thread (4) on the tube has in its zone which is most remote from the end of this tube, threads of decreasing height in the vicinity of its connection to the tube wall.

8. A container according to one of Claims 1 to 7, characterised in that the wall of revolution (3, 43) of which the end forms the abutment (10, 50) consists of a thinned tube end which extends the frustoconical male screw-threaded zone (4, 44) on which engages the female screw thread (6, 46) of the tubular clamping element (5, 45) in order to ensure sealing-tight clamping of the bearing surface (9, 51) of the occlusion disc (7, 49) against the said abutment.

9. A container according to Claim 8, characterised in that the wall of which the inner annular surface (16) exerts a pressure force with a radial component on the thinned outer annular surface (15) of the tube in the vicinity of its front end which forms an abutment (10) is the inner wall opposite the clamping element (5), said pressure being a function of the degree of tightness achieved by screwing up the clamping element.

10. A container according to Claim 8, characterised in that the wall of which the inner annular surface exerts a pressure force having a radial component on the thinned outer annular surface (55) of the tube (42) in the vicinity of its front end which forms an abutment (50) is the inner opposed wall (54)of a collar (52) rigid with the occlusion disc (49), said pressure being a function of the degree of tightness achieved by screwing up the clamping element (45).

11. A container according to one of Claims 1 to 7, characterised in that the wall of revolution (67) of which the front end constitutes the abutment (66) is connected by its end opposite its front end to the occlusion disc (69) and in that the bearing surface (65) is formed on the inside wall of the tube (62), which tube comprises a female frustoconical screw thread (70) on which engages the male screw thread (76) on the clamping element (71).

12. A container according to Claim 11, characterised in that the wall of which the inner annular surface (74) exerts a pressure force with a radial component on the outer annular surface (73) of the wall of revolution (67) of which the front end constitutes the abutment (66) is the inside opposite wall of the tube (62) in the zone comprised between the bearing surface (65) and the female screw thread (70) on the said tube.

13. A container according to one of Claims 1 to 12, characterised in that a removable annular seal (25) is placed between the abutment and the bearing surface.

14. A container according to Claim 13, characterised in that the annular seal (25) is of metal.

15. A container according to one of Claims 8 to 10, characterised in that it comprises a removable seal (22) between the inside wall (23) of the end of the tube adjacent the abutment (10) and the opposed lateral wall (20), of the occlusion disc (7).

16. A container according to one of Claims 1 to 15, characterised in that it comprises a removable seal (30) between the annular thrust zone (11) of the clamping element (5) and the opposed annular surface (12) of the occlusion disc (7).

17. A container according to one of Claims 1 to 16, characterised in that a lubricant is spread between the slidingly bearing surfaces of the clamping element (5, 45, 71) and of the occlusion disc (7, 49, 69) to prevent the latter rotating while the said clamping element is being screwed up.

18. A container according to one of Claims 1 to 17, characterised in that a means of arresting rotation (58, 77) makes it possible to avoid the clamping element (45, 71) from becoming unscrewed.

19. A container according to one of Claims 1 to 18, characterised in that the occlusion disc has a concave or convex front face which is substantially a surface of revolution.

20. A container according to one of Claims 1 to 19, characterised in that at least one occlusion disc is provided with at least one sealing-tight passage for fluid at high pressure.
